# EUROPÄISCHE PATENTANMELDUNG

(11) **EP 1 036 682 A2**
(43) Veröffentlichungstag der Anmeldung: **20.09.2000**
(21) Anmeldenummer: 00103648.2
(22) Anmeldetag: 21.02.2000
(51) Int. Cl.: B60J 3/02

(54) **Halterung zur Besfestigung einer Sonnenblende**

(30) Priorität: 15.03.1999 DE 19911393
(71) Anmelder: Delphi Technologies, Inc., Troy, MI 48007 (US)
(72) Erfinder: Günay, Tarik, 41460 Neuss (DE); Bramesfeld, Wulf, Dr., 42389 Wülfrath (DE); Diedrich, Udo, 58285 Gevelsberg (DE)
(74) Vertreter: Manitz, Finsterwald & Partner

(57) **Zusammenfassung**

Eine Halterung zur Befestigung einer elektrifizierten Sonnenblende an einem Fahrzeug weist eine Aufnahme (14) für einen Befestigungsarm (16) der Sonnenblende sowie Montagemittel zur Montage der Halterung an dem Fahrzeug auf. Die Halterung dient zur Verbindung mit einem Leiter eines fahrzeugseitigen Kabelbaums (30).

## Beschreibung

Die Erfindung betrifft eine Halterung zur Befestigung einer elektrifizierten Sonnenblende an einem Fahrzeug, wobei die Halterung eine Aufnahme für einen Befestigungsarm der Sonnenblende sowie Montagemittel zur Montage der Halterung an dem Fahrzeug aufweist.

Die elektrische Anbindung für eine elektrifizierte Sonnenblende umfaßt üblicherweise ein Kabel mit einem Kabelverbinder. Das Kabel ist in einem Hohlraum im Dach geführt und hängt mit einer Überlänge in das Fahrzeuginnere herab. An der Sonnenblende ist ebenfalls ein Kabel mit einem Kabelverbinder befestigt, das durch den Befestigungsarm hindurchgeführt ist. Beim Zusammenbau müssen zunächst die beiden Kabelverbinder zusammengesteckt werden, danach muß die Überlänge des Kabels in den Hohlraum im Dach zurückgeführt werden und anschließend muß die Halterung der Sonnenblende mittels Schrauben am Dach befestigt werden.

Das Anbringen der Sonnenblende ist zeitaufwendig und mit Fehlern behaftet. Denn wenn die Überlänge nicht korrekt in den Hohlraum im Dach eingelegt wird, kann das Kabel durch die Schrauben beschädigt werden. Außerdem erfordert der gesamte Arbeitsgang viel Handarbeit.

Es ist daher Aufgabe der vorliegenden Erfindung, eine Halterung der eingangs genannten Art so auszugestalten, daß sie einfacher und billiger herzustellen ist und sich auch in automatisierte Prozesse integrieren läßt.

Diese Aufgabe wird bei einer Halterung der eingangs genannten Art dadurch gelöst, daß diese an ihrer vom Fahrzeuginnenraum wegweisenden Rückseite als Steckkontaktgehäuse ausgebildet ist, und daß ein Gegenstück vorgesehen ist, in welches das Steckkontaktgehäuse einsetzbar ist und das zur Verbindung mit einem Leiter dient.

Infolge der erfindungsgemäßen Ausgestaltung kann das Anbringen der Sonnenblende und das Verbinden der Kabel zusammengefaßt werden. Der Kabelbaum bzw. das dem Dach zugeordnete Kabel wird zusammen mit dem Gegenstück am Dachblech angebracht. Danach wird der Dachhimmel im Fahrzeug befestigt und die Sonnenblende angebracht. Das Anbringen der Sonnenblende und das Herstellen der elektrischen Verbindungen ist lediglich ein einziger, einfacher und selbstpositionierender Einsteckvorgang, der in kürzester Zeit und auch automatisiert durchzuführen ist.

Vorteilhafte Ausführungsformen der Erfindung sind in der Beschreibung, den Zeichnungen sowie den Unteransprüchen beschrieben.

So können in dem Steckkontaktgehäuse nach einer ersten vorteilhaften Ausführungsform zumindest zwei Federkontakte angeordnet sein, an deren Enden Leiter für den Anschluß einer elektrischen Einrichtung angeschlossen sind, die sich in der Sonnenblende befindet. Die elektrische Einrichtung kann ein Schalter, ein Leuchtmittel oder ein beliebiges anderes elektrisches Bauteil sein. Bei dieser Ausführungsform kann die Sonnenblende zusammen mit dem Befestigungsarm, der Halterung und den Leitern vollständig vormontiert werden, wodurch sich eine vorgefertigte Einheit ergibt, die lediglich in das erfindungsgemäß vorgesehene Gegenstück eingesetzt werden muß. Nach einer Fixierung durch beispielsweise Befestigungsschrauben ist nicht nur die Sonnenblende fertig an dem Fahrzeug montiert sondern es sind auch die erforderlichen elektrischen Verbindungen geschaffen, ohne daß hierfür zusätzliche Montagezeit erforderlich ist.

Es ist vorteilhaft, wenn das Gegenstück Befestigungsmittel zur Befestigung an einem Trägerblech und/oder einem Dachhimmel aufweist. Derartige Befestigungsmittel können beispielsweise Schnappführungen, Rasthaken oder dergleichen sein, mit deren Hilfe das Gegenstück auf einfache Weise an dem Befestigungsblech und/oder dem Dachhimmel befestigt werden kann. Beispielsweise können zwei parallele und nach außen offene Schienenabschnitte vorgesehen sein, so daß das Gegenstück in eine beispielsweise rechteckige Aussparung in einem Montageblech eingedrückt werden kann, so daß das Gegenstück fest und unverlierbar in der Öffnung des Montagebleches gehalten ist.

Nach einer weiteren vorteilhaften Ausführungsform sind das Steckkontaktgehäuse und das Gegenstück über einen Klemmsitz in eine Vormontagestellung bringbar. Auf diese Weise kann die Sonnenblende bei der Montage in das Gegenstück eingesetzt werden und bleibt in diesem fixiert, bis die Halterung mit Befestigungsschrauben an einem Trägerblech befestigt ist.

Nach einer weiteren vorteilhaften Ausführungsform weist das Gegenstück eine Aufnahme für einen Leiter, insbesondere für eine flexible Leiterbahn auf, die vorzugsweise zumindest einen Durchtrittsschlitz und zumindest einen Haltenoppen aufweist. Bei dieser Ausführungsform kann das Gegenstück im vorhinein mit dem Leiter verbunden werden, so daß das mit dem Leiter kontaktierte Gegenstück in einen Dachhimmel und/oder ein Montageblech eingesetzt werden kann. Sofern das Gegenstück einen Durchtrittsschlitz für eine flexible Leiterbahn aufweist, kann diese in das Innere des Gegenstückes eingeführt werden, wodurch beim Einsetzen des Steckkontaktgehäuses in das Gegenstück automatisch eine Kontaktierung zwischen Sonnenblende und Leiter erfolgt. Durch' einen zusätzlich vorgesehenen Haltenoppen kann das durch den Innenraum des Gegenstückes durchgeführte Leiterstück fixiert werden, indem der Haltenoppen durch eine Öffnung in dem Leiter gesteckt und gegebenenfalls anschließend verbreitert wird.

Besonders vorteilhaft ist es, wenn das Steckkontaktgehäuse als zapfenartiger Vorsprung ausgebildet ist, der von einer Grundplatte vorsteht. Auf diese Weise läßt sich bei der Montage der Halterung an dem Fahrzeug auf einfache Weise eine Zentrierung in der richtigen Montageposition erreichen.

Nach einer weiteren vorteilhaften Ausführungsform weist die Halterung einen zylindrischen Vorsprung auf, auf den der Haltearm aufsteckbar ist, wobei der zylindrische Vorsprung in den zapfenartigen Vorsprung übergeht, der von der Rückseite der Grundplatte vorsteht. Bei dieser Ausführungsform können im Inneren der Vorsprünge Kammern vorgesehen werden, um Federkontakte aufzunehmen, die einerseits mit einer elektrischen Einrichtung im Inneren der Sonnenblende verbunden sind und die andererseits zur Kontaktierung mit dem Leiter dienen.

Durch Kammern, die in dem Steckkontaktgehäuse zur Aufnahme von Federkontakten vorgesehen sind, können diese als integraler Bestandteil der Halterung isoliert voneinander vorgesehen werden. Hierbei können die Kammern eine Aussparung für den Durchtritt eines Teils eines Federkontaktes aufweisen, so daß dieser Teil von der Außenkontur des Steckkontaktgehäuses vorsteht und beim Einsetzen des Steckkontaktgehäuses das Gegenstück automatisch mit dem darin vorgesehenen Leiter eine leitende Verbindung herstellt.

Weitere vorteilhafte Merkmale und Ausgestaltungen ergeben sich aus der nachfolgenden Beschreibung eines bevorzugten Ausführungsbeispiels. Es zeigen
- Fig. 1: eine Explosionsdarstellung einer erfindungsgemäßen Halterung,
- Fig. 2: eine vergrößerte Explosionsdarstellung ähnlich der von Fig. 1,
- Fig. 3: eine Ansicht einer fertig montierten Halterung, gesehen vom Fahrzeuginnenraum, und
- Fig. 4: eine Ansicht der vom Fahrzeuginnenraum abgewandten Seite (Rückseite) der Halterung von Fig. 3.

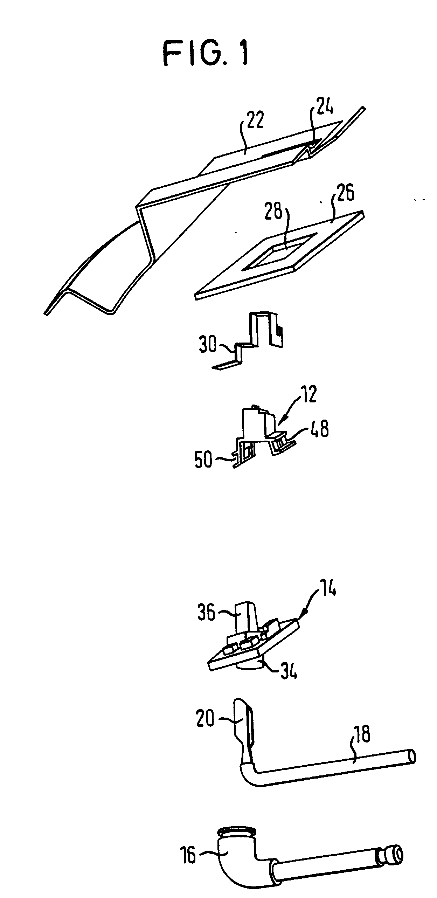

Figur 1 zeigt eine Explosionsdarstellung einer erfindungsgemäßen Halterung, die beim dargestellten Ausführungsbeispiel eine Aufnahme 14 für einen Befestigungsarm 16 einer nicht dargestellten Sonnenblende sowie ein Gegenstück 12 für die Aufnahme 14 aufweist. Ein zweipoliger Leiter 18, der beispielsweise mit einem an der Sonnenblende vorgesehenen Schalter verbunden sein kann, ist an seinem in Figur 1 linken Ende mit Federkontakten 20 verbunden. Der Leiter wird durch den Befestigungsarm 16 geführt und die Federkontakte 20 werden in die Aufnahme 14 eingesteckt, wie nachfolgend noch näher erläutert wird. Der Befestigungsarm 16 mit daran auf herkömmliche Weise befestigter Sonnenblende kann dann beispielsweise mit Hilfe eines Sicherungsringes in der Halterung 14 verschwenkbar befestigt werden, wodurch eine vormontierte Einheit geschaffen ist.

Zur Montage dieser Einheit an einem Fahrzeug ist in einem Trägerblech 22 des Fahrzeugs eine Aussparung 24 vorgesehen. In einem Fahrzeughimmel 26 ist eine vorzugsweise viereckige Aussparung 28 vorgesehen. Es versteht sich, daß in den Figuren zur erleichterten Darstellung nur Ausschnitte des Trägerbleches 22 sowie des Fahrzeughimmels 26 dargestellt sind.

Vor der Montage des Fahrzeughimmels 26 wird ein Leiter der im dargestellten Ausführungsbeispiel als Flachbandkabel 30 ausgebildet ist, mit dem Gegenstück 12 so verbunden, daß der Leiter im Inneren des Gegenstückes 12 freiliegt. Hierdurch erfolgt automatisch eine elektrische Kontaktierung, wenn die Aufnahme 14 in das Gegenstück 12 eingesteckt wird. Das mit dem Leiter 30 verbundene Gegenstück 12 wird in die Aussparung 28 des Fahrzeughimmels 26 eingeklipst, woraufhin der Fahrzeughimmel an der Unterseite des Trägerbleches 22 montiert werden kann. Hierbei zentriert sich das Gegenstück 12 von selbst in der Aussparung 24 des Trägerbleches 22. Anschließend kann die vormontierte Sonnenblende mit daran befindlicher Aufnahme 14 in das Gegenstück 12 eingesteckt werden, so daß die Aufnahme 14 in dem Gegenstück 12 durch Klemmsitz gehalten ist. Anschließend wird die Aufnahme 14 mit zwei Befestigungsschrauben an dem Trägerblech 22 verschraubt.

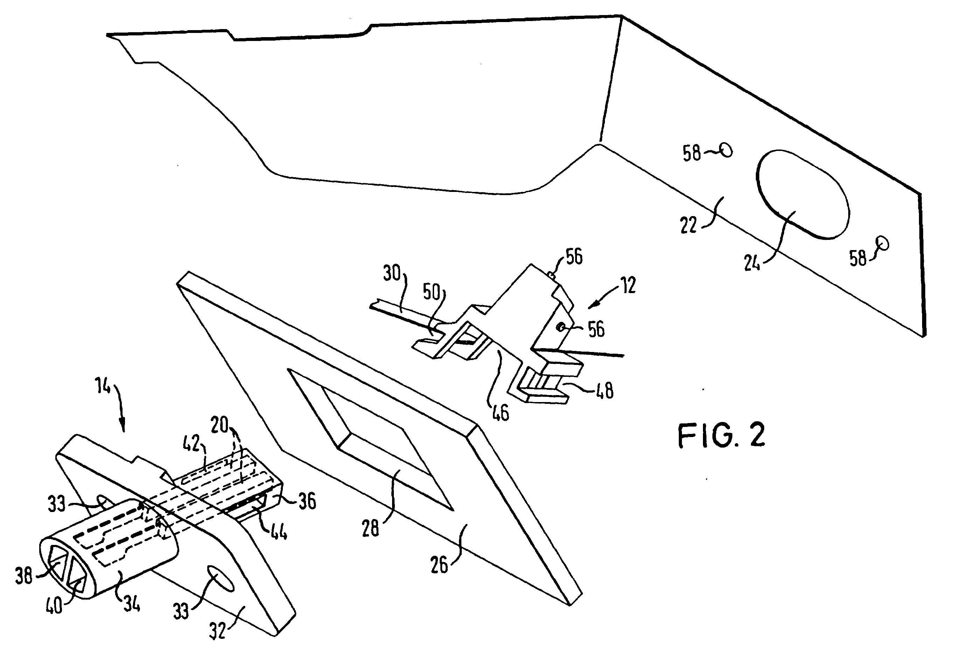

Figur 2 zeigt eine vergrößerte Explosionsdarstellung einer Aufnahme 14 und eines Gegenstückes 12. Wie zu erkennen ist, weist die Aufnahme 14 eine Grundplatte 32 auf, in der zwei Bohrungen 33 zur Durchführung von Montageschrauben (nicht dargestellt) vorgesehen sind. Von der Unterseite der Montageplatte 32, d.h. der zum Fahrzeuginnenraum gerichteten Seite, steht ein einstückig angeformter, zylindrischer Vorsprung 34 vor, auf den der Befestigungsarm 16 aufgesteckt werden kann. An der Seite der Grundplatte 32, die vom Fahrzeuginnenraum wegweist, ist ein Steckkontaktgehäuse 36 angeformt, das als zapfenartiger Vorsprung ausgebildet ist, der in den zylindrischen Vorsprung 34 übergeht. In dem Steckkontaktgehäuse 36 und dem zylindrischen Vorsprung 34 sind zwei getrennte Kammern 38, 40 vorgesehen, in denen jeweils ein Federkontakt 20 untergebracht ist, der auf bekannte Weise in der Kammer verrastet werden kann. An dem in Figur 2 linken Ende jedes Federkontaktes 20 wird der Leiter 18 angecrimpt. Das Steckkontaktgehäuse 36 weist an einer Seitenwand Aussparungen 42, 44 auf, durch die ein Teil jedes Federkontaktes 20 austreten kann, um eine elektrische Verbindung mit dem Flachbandleiter 30 herzustellen.

Das Gegenstück 12 weist eine an die Außenkontur des Steckkontaktgehäuses 36 angepaßte Aufnahmekammer 46 auf und besitzt zwei parallel zueinander verlaufende Schienenabschnitte 48, 50, mit deren Hilfe das Gegenstück 12 in die Aussparung 28 des Dachhimmels 26 eingeklipst werden kann.

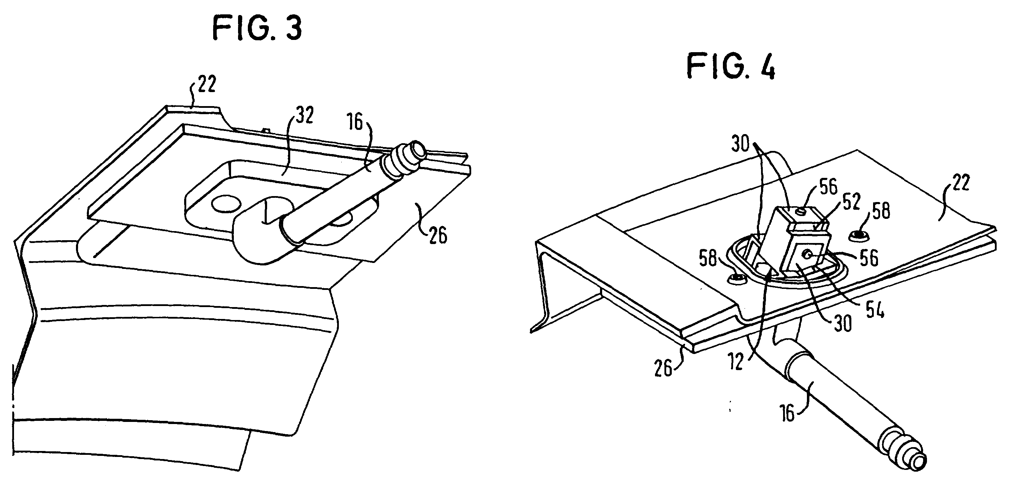

Wie insbesondere die Figuren 1 und 4 zeigen, ist der Flachbandleiter 30 so vorgeformt, daß er im wesentlichen der Außenkontur des Gegenstückes 12 entspricht. Der Flachbandleiter 30 wird bei der Vormontage durch einen Schlitz 52 in die Aufnahmekammer 46 so eingeführt, daß elektrisch nicht isolierte Bereiche des zweipoligen Flachbandleiters in die Aufnahmekammer 46 weisen. Das Ende des Flachbandleiters 30 wird an der Unterseite der Aufnahmekammer 46 durch einen weiteren Schlitz 54 aus dieser herausgeführt und parallel zur Außenwand des Gegenstückes 12 geführt. An der Außenseite des Gegenstückes 12 sind mehrere Noppen 56 vorgesehen, die zur Fixierung des Flachbandleiters 30 dienen und thermisch verformt werden können.

Nachfolgend wird nochmals die vollständige Montage einer Sonnenblende mit der erfindungsgemäßen Halterung beschrieben.

Wie Figur 1 zeigt, wird bei der Vormontage der Leiter 18, der an seinem einen Ende mit einer elektrischen Einrichtung im Inneren der Sonnenblende verbunden ist, durch den Befestigungsarm 16 hindurchgeführt. An seinem anderen Ende werden die Federkontakte 20 angecrimpt. Anschließend werden die beiden Federkontakte 20 in die Kammern 38 und 40 der Aufnahme 14 eingeführt, so daß sie in der in Figur 2 dargestellten Position verrasten. Hierauf wird der Befestigungsarm 16 auf den zylindrischen Vorsprung 34 aufgesteckt und in der Aufnahme 14 verrastet. Die Sonnenblende und die daran befestigte Aufnahme 14 bilden nun eine fertig vormontierte Einheit.

Der Flachbandleiter 30, der Bestandteil eines Kabelbaums sein kann, wird in die in Figur 1 dargestellte Form gebracht und wie in Figur 4 dargestellt an dem Gegenstück 12 so befestigt, daß elektrisch nicht isolierte Bereiche in das Innere der Aufnahmekammer 46 des Gegenstückes 12 weisen. Die Fixierung des Leiters an dem Gegenstück erfolgt dabei durch die Noppen 56. Hierbei wird der Leiter 30 durch den Schlitz 52 in die Aufnahmekammer 46 eingeführt und durch den weiteren Schlitz 54 aus dieser wieder herausgeführt.

Das mit dem Leiter 30 verbundene Gegenstück 12 wird anschließend in die Aussparung 28 des Fahrzeughimmels 26 eingeklipst, wobei die Schienenabschnitte 48 und 50 die Ränder der Aussparung 28 aufnehmen. Der so vormontierte Fahrzeughimmel 26 wird nun an der Unterseite des Trägerbleches 22 im Fahrzeuginnenraum montiert. Hierbei dient das Gehäuse der Aufnahmekammer 46 zur Zentrierung in der Aussparung 24 des Trägerbleches 22.

Die vormontierte Sonnenblende kann nun an dem Fahrzeug montiert werden, indem das Steckkontaktgehäuse 36 in die Aufnahmekammer 46 des Gegenstückes 12 so eingesetzt wird, daß die freiliegenden Abschnitte der Federkontakte 20 den Flachbandleiter 30 im Inneren der Aufnahmekammer kontaktieren. Aufgrund der Federspannung der Federkontakte 20 und der übrigen Dimensionierung ist das Steckkontaktgehäuse 36 mittels eines Klemmsitzes in der Aufnahmekammer 46 des Gegenstückes 12 gehalten, so daß anschließend zwei Montageschrauben (nicht dargestellt) durch die Bohrungen 33 in der Grundplatte 32 und durch den Fahrzeughimmel 26 geführt und in Bohrungen 58 in dem Trägerblech 22 verschraubt werden können.

Lediglich der Vollständigkeit halber sei darauf hingewiesen, daß die Aufnahme 14 und das Gegenstück 12 aus elektrisch isolierendem Kunststoff hergestellt sind. Ferner ist in den Figuren 2 bis 4 der elektrische Leiter 18 zur erleichterten Darstellung weggelassen.

### Bezugszeichenliste

- 12: Gegenstück
- 14: Aufnahme
- 16: Befestigungsarm
- 18: Leiter
- 20: Federkontakt
- 22: Trägerblech
- 24: Aussparung
- 26: Fahrzeughimmel
- 28: Aussparung
- 30: Leiter
- 32: Grundplatte
- 33: Bohrungen
- 34: Vorsprung
- 36: Steckkontaktgehäuse
- 38, 40: Kammer
- 42, 44: Aussparung
- 46: Aufnahmekammer
- 48, 50: Schienenabschnitt
- 52, 54: Schlitz
- 56: Noppen
- 58: Bohrungen

## Patentansprüche

1. Halterung zur Befestigung einer elektrifizierten Sonnenblende an einem Fahrzeug, wobei die Halterung eine Aufnahme (14) für einen Befestigungsarm (16) der Sonnenblende sowie Montagemittel (33) zur Montage der Halterung an dem Fahrzeug aufweist,
dadurch **gekennzeichnet,** daß
die Halterung (10) an ihrer vom Fahrzeuginnenraum wegweisenden Rückseite als Steckkontaktgehäuse (36) ausgebildet ist, und daß ein Gegenstück (16) vorgesehen ist, in welches das Steckkontaktgehäuse (36) einsetzbar ist und das zur Verbindung mit einem Leiter (30) dient.

2. Halterung nach Anspruch 1,
dadurch **gekennzeichnet,** daß
in dem Steckkontaktgehäuse (36) zumindest zwei Federkontakte (20) angeordnet sind, an deren Enden Leiter (18) für den Anschluß einer elektrischen Einrichtung angeschlossen sind, die sich in der Sonnenblende befindet.

3. Halterung nach Anspruch 1 oder 2,
dadurch **gekennzeichnet,** daß
das Gegenstück (12) Befestigungsmittel (48, 50) zur Befestigung an einem Trägerblech (22) und/oder einem Fahrzeughimmel (26) aufweist.

4. Halterung nach zumindest einem der vorstehenden Ansprüche,
dadurch **gekennzeichnet,** daß
das Steckkontaktgehäuse (36) und das Gegenstück (12) über einen Klemmsitz in eine Vormontagestellung bringbar sind.

5. Halterung nach zumindest einem der vorstehenden Ansprüche,
dadurch **gekennzeichnet,** daß
das Gegenstück (12) eine Aufnahme für einen Leiter, insbesondere eine flexible Leiterbahn (33), aufweist, die vorzugsweise zumindest einen Durchtrittsschlitz (52, 54) und zumindest einen Haltenoppen (56) aufweist.

6. Halterung nach zumindest einem der vorstehenden Ansprüche,
dadurch **gekennzeichnet,** daß
das Steckkontaktgehäuse (36) als zapfenartiger Vorsprung ausgebildet ist, der von einer Grundplatte (32) vorsteht.

7. Halterung nach zumindest einem der vorstehenden Ansprüche,
dadurch **gekennzeichnet,** daß
die Halterung einen zylindrischen Vorsprung (34) aufweist, auf den der Haltearm (16) aufsteckbar ist.

8. Halterung nach Anspruch 6 und 7,
dadurch **gekennzeichnet,** daß
der zapfenartige (36) und der zylindrische (34) Vorsprung ineinander übergehen, wobei insbesondere im Inneren der Vorsprünge Kammern (38, 40) zur Aufnahme von Federkontakten (20) vorgesehen sind.

9. Halterung nach zumindest einem der vorstehenden Ansprüche,
dadurch **gekennzeichnet,** daß
in dem Steckkontaktgehäuse (36) Kammern (38, 40) zur Aufnahme von Federkontakten (20) vorgesehen sind, wobei die Kammern vorzugsweise eine Aussparung (42, 44) für den Durchtritt eines Teils eines Federkontaktes aufweisen.

10. Sonnenblende mit einer Halterung nach zumindest einem der vorstehenden Ansprüche.
